(19)

Europäisches
Patentamt

European
Patent Office

Office européen
des brevets

(11)    **EP 4 676 065 A1**

(12)    **EUROPEAN PATENT APPLICATION**
published in accordance with Art. 153(4) EPC

(43) Date of publication:
    **07.01.2026  Bulletin 2026/02**

(21) Application number: **24762962.9**

(22) Date of filing: **04.02.2024**

(51) International Patent Classification (IPC):
    ***H04N 21/433*** *(2011.01)*

(86) International application number:
    **PCT/CN2024/075841**

(87) International publication number:
    **WO 2024/179279 (06.09.2024 Gazette 2024/36)**

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH MA MD TN**

(30) Priority:  **01.03.2023  CN 202310225656**

(71) Applicant: **Shenzhen TCL New Technology Co.,
    Ltd.
    Shenzhen, Guangdong 518052 (CN)**

(72) Inventor: **LV, Hua
    Shenzhen, Guangdong 518052 (CN)**

(74) Representative: **Herrero & Asociados, S.L.
    Edificio Aqua - Calle Agustín de Foxá, 4-10, 2ºA
    28036 Madrid (ES)**

(54)    **MULTIMEDIA DATA TRANSMISSION METHOD AND APPARATUS, MEDIUM, AND DEVICE**

(57)    Embodiments of the present application provide a multimedia data transmission method and apparatus, a medium, and a device. The method comprises: calculating in real time a playable duration corresponding to multimedia data in a buffer; and if the playable duration does not exceed a target expected delay, reducing a first playback speed of the multimedia data in the buffer. According to the embodiments of the present application, a playable duration is compared with an expected delay, and whether to regulate a current playback speed is determined according to the comparison result, thereby avoiding picture freezing.

FIG. 1

EP 4 676 065 A1

**Description**

This application claims priority to Chinese Patent Applications No. 202310225656.2, filed on March 1, 2023 and entitled "MULTIMEDIA DATA TRANSMISSION METHOD AND APPARATUS, MEDIUM, AND DEVICE". The entire disclosures of the above application are incorporated herein by reference.

TECHNICAL FIELD

The present application relates to a multimedia data transmission method and apparatus, a medium, and a device.

BACKGROUND TECHNOLOGY

At present, in an application scenario of real-time video transmission, in order to ensure a normal transmission of real-time video, the real-time video to be transmitted usually needs to meet preset index requirements. The main indexes include: delay, picture, and audio quality. During a transmission process, the real-time video will select parameters such as picture resolution and audio encoding format according to a current network bandwidth. When the network is smooth, the real-time video can meet the index requirements of delay, picture, and audio. However, when the network is suddenly congested (jitter), a receiving end (user end) will not be able to receive video data to be played normally, resulting in problems of image freeze and discontinuity, affecting the user's viewing experience.

Accordingly, a simpler and more effective method is needed to avoid the problem of image freeze on a user side caused by data reception delay at the receiving end due to the poor current network in the application scenario of the real-time video transmission.

SUMMARY OF INVENTION

Embodiments of the present application provide a multimedia data transmission method and apparatus, a medium, and a device. In the multimedia data transmission method provided in the embodiments of the present application, an acceptable expected delay is set, and a playback duration corresponding to multimedia data that has been buffered and sent to the buffer is calculated in real time, and the playback duration is compared with the expected delay. According to a comparison result, it is determined whether to adjust a current playback speed. Specifically, when the playback duration in the current buffer is less than the expected delay, it indicates that there is a transmission anomaly in a current network, resulting in no new buffered data entering the buffer. At this time, image freeze can be prevented by reducing a playback speed of a currently playable multimedia data.

In one aspect, an embodiment of the present application provides a multimedia data transmission method, the multimedia data transmission method includes:

receiving a multimedia data packet transmitted by a transmitting end.

storing multimedia data to be played in the multimedia data packet into a multimedia data buffer for buffering.

calculating a playback duration corresponding to the multimedia data in the buffer in real time.

when the playback duration does not exceed a target expected delay, reducing a first playback speed of the multimedia data in the buffer to obtain a second playback speed.

Accordingly, another aspect of an embodiment of the present application further provides a multimedia data transmission method, including:

acquiring a multimedia data packet to be transmitted.

transmitting the multimedia data packet to be transmitted to a receiving end, so that the receiving end stores multimedia data to be played in the multimedia data packet into a multimedia data buffer for buffering, and calculating a playback duration corresponding to the multimedia data in the multimedia data buffer in real time, and when the playback duration does not exceed a target expected delay, reducing a first playback speed of the multimedia data in the multimedia data buffer to obtain a second playback speed.

Accordingly, another aspect of an embodiment of the present application further provides a multimedia data transmission apparatus, the multimedia data transmission apparatus includes:

a data receiving module configured to receive a multimedia data packet transmitted by a transmitting end.

a data buffer module configured to store multimedia data to be played in the multimedia data packet into a multimedia data buffer for buffering.

a duration calculation module configured to calculate a playback duration corresponding to the multimedia data in the buffer in real time.

a first speed adjustment module configured to reduce a first playback speed of the multimedia data in the buffer to obtain a second playback speed when the playback duration does not exceed a target expected delay.

Accordingly, another aspect of an embodiment of the present application further provides a data acquisition module, and the multimedia data transmission apparatus includes:

a data acquisition module configured to acquire multimedia data to be transmitted.
a data transmission module configured to transmit multimedia data packet to be transmitted to a receiving end, so that the receiving end stores multimedia data to be played in the multimedia data packet into a multimedia data buffer for buffering, and calculate a playback duration corresponding to the multimedia data in the multimedia data buffer in real time, and when the playback duration does not exceed a target expected delay, reduce a first playback speed of the multimedia data in the multimedia data buffer to obtain a second playback speed.

Correspondingly, another aspect of an embodiment of the present application further provides a storage medium. The storage medium stores a plurality of instructions, and the instructions are suitable for being loaded by a processor to execute the multimedia data transmission method as described above.
Correspondingly, another aspect of an embodiment of the present application further provides a terminal device, including a processor and a memory. The memory stores a plurality of instructions, and the processor loads the instructions to execute the multimedia data transmission method as described above.
The embodiments of the present application provide the multimedia data transmission method and apparatus, the medium, and the device. The method receives the multimedia data packet transmitted by the transmitting end; stores the multimedia data to be played in the multimedia data packet into the multimedia data buffer for buffering; calculates the playback duration corresponding to the multimedia data in the buffer in real time; and when the playback duration does not exceed the target expected delay, reduces the first playback speed of the multimedia data in the buffer to obtain the second playback speed. In the multimedia data transmission method provided in the embodiments of the present application, an acceptable expected delay is set, and the playback duration corresponding to the multimedia data that has been buffered in the buffer is calculated in real time. The playback duration is compared with the expected delay. Based on a comparison result, it is determined whether to adjust a current playback speed. Specifically, when the playback duration in the current buffer is less than the expected delay, it means that there is a transmission anomaly in the current network, resulting in no new buffered data entering the buffer. At this time, image freeze can be prevented by reducing the playback speed of the currently playable multimedia data.

BRIEF DESCRIPTION OF THE DRAWINGS

In order to more clearly illustrate technical solutions in embodiments of the present application, the following briefly introduces accompanying drawings required for the description of the embodiments. Apparently, the accompanying drawings described below are only some embodiments of the present application, and those skilled in the art can obtain other drawings based on these drawings without creative efforts.

FIG. 1 is a schematic diagram of an application scenario of a multimedia data transmission method provided in an embodiment of the present application.
FIG. 2 is a flowchart of a multimedia data transmission method provided in an embodiment of the present application.
FIG. 3 is another schematic diagram of a flow chart of a multimedia data transmission apparatus provided in an embodiment of the present application.
FIG. 4 is a schematic diagram of a structure of a multimedia data transmission apparatus provided in an embodiment of the present application.
FIG. 5 is another schematic diagram of a structure of a multimedia data transmission apparatus provided in an embodiment of the present application.

FIG. 6 is another schematic diagram of a structure of a multimedia data transmission apparatus provided in an embodiment of the present application.

FIG. 7 is a schematic diagram of a structure of a terminal device provided in an embodiment of the present application.

## DETAILED DESCRIPTION OF THE EMBODIMENTS

Embodiments of invention

Technical solutions in embodiments of the present application will be clearly and completely described below in conjunction with the accompanying drawings in the embodiments of the present application. Apparently, the described embodiments are only a part of the embodiments of the present application, rather than all the embodiments. Based on the embodiments in the present application, all other embodiments obtained by those skilled in the art without paying creative efforts are within the scope of protection of the present application.

An embodiment of the present application provides a multimedia data transmission method. An acceptable expected delay is set, and a playback duration corresponding to multimedia data that has been buffered in a buffer is calculated in real time. The playback duration is compared with the expected delay. Based on a comparison result, it is determined whether to adjust a current playback speed. Specifically, when the playback duration in the current buffer is less than the expected delay, it indicates that there is a transmission anomaly in a current network, resulting in no new buffered data entering the buffer. At this time, image freeze can be prevented by reducing the playback speed of currently playable multimedia data. Each of these is described in detail below.

A term "and/or" in this application can be a description of an association relationship of associated objects, indicating that there can be three relationships. For example, A and/or B can represent: A exists alone, A and B exist at the same time, and B exists alone. In addition, the character "/" in this application generally indicates that the associated objects before and after are in an "or" relationship.

In the specification, claims, and accompanying drawings of this application, terms "first", "second", and the like are intended to distinguish similar objects but do not necessarily indicate a specific order or sequence. It should be understood that data termed in such a way are interchangeable in proper circumstances so that embodiments described herein can be implemented in other orders than the order illustrated or described herein. Moreover, terms "include", "contain" and any other variant thereof mean to cover non-exclusive inclusion. For example, a process, a method, a system, a product, or a device that includes a series of steps or modules is not necessarily limited to expressly listing those steps or modules, but may include other steps or modules not expressly listed or inherent to the process, the method, the system, the product, or the device. Naming or numbering of the steps in this application does not mean that the steps in the method procedures need to be performed in a time/logical sequence indicated by naming or numbering. An execution order of the steps in the procedures that have been named or numbered can be changed according to the technical objective to be achieved, as long as same or similar technical effects can be achieved. Division into modules in this application is logical division and may be other division in actual application implementation. For example, a plurality of modules may be combined or integrated into another system, or some features may be ignored or not performed. In addition, the displayed or discussed mutual couplings, direct couplings, or communication connections may be implemented through some interfaces. The indirect couplings or communication connections between the modules may be implemented in electronic or another form. This is not limited in this application. In addition, modules or sub-modules described as separate components may be or may not be physically separated, or may be or may not be physical modules, or may be distributed to a plurality of circuit modules. Objectives of the solutions of this application may be achieved by selecting some or all of the modules based on actual demands.

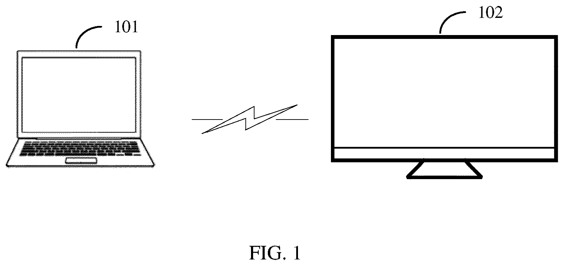

An application scenario of the embodiment of the present application is shown in FIG. 1, which includes: a transmitting end 101 and a receiving end 102. The receiving end 102 and the transmitting end 101 can communicate with each other through a network connection.

Exemplarily, the transmitting end 101 may be a computer, a server, etc., which is not limited here. Alternatively, the server may be an independent physical server, or a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, CDN (Content Delivery Network), and big data and artificial intelligence platforms, which is not limited here.

The receiving end 102 can be a TV, a smart phone, a tablet computer, a laptop computer, a desktop computer, a smart speaker, a smart watch, a smart voice interaction device, a smart home appliance, and a vehicle terminal, etc., which are not limited here.

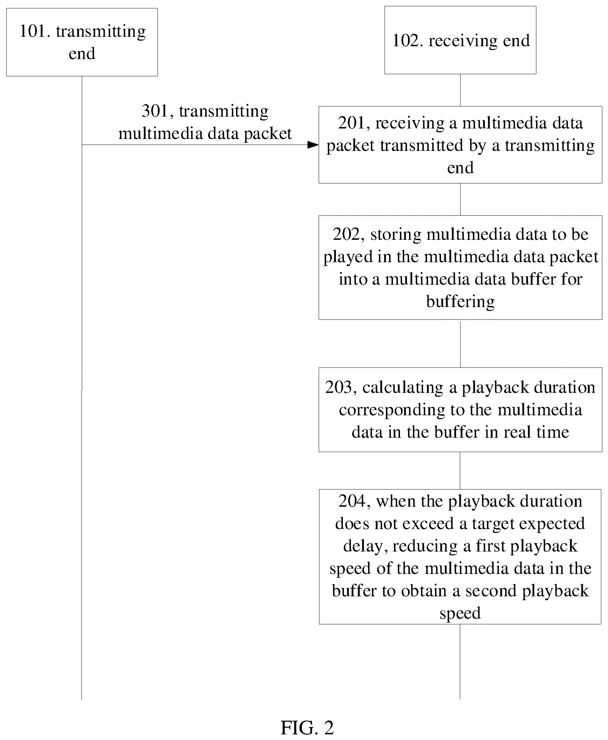

For ease of understanding, the specific process in the embodiment of the present application is described below, please refer to FIG. 2.

FIG. 2 is a flowchart of a multimedia data transmission method provided by an embodiment of the present application.

In the embodiment shown in FIG. 2, the method may include the following steps:

Step 201, receiving a multimedia data packet transmitted by a transmitting end.

This solution can be applied to network live broadcast scenarios or other real-time video transmission scenarios, and is not limited here. In this embodiment, taking the network live broadcast scenario as an example, after a receiving end and the transmitting end establish a network transmission channel and enable a network live broadcast function, the receiving end receives the multimedia data packet transmitted by the transmitting end.

Step 202, storing multimedia data to be played in the multimedia data packet into a multimedia data buffer for buffering.

In this embodiment, the receiving end reads the multimedia data to be played in the multimedia data packet, where the multimedia data refers to video data or audio data or audio and video data, which is not limited here.

It should be explained that multimedia data buffer, as a buffer pool between a "decoding thread" and a "display thread", mainly plays two roles, namely, a necessary condition for achieving "audio-visual synchronization" and resisting rendering jitter. Assuming there is no "multimedia data buffer", that is, the "decoding thread" and the "display thread" are serial, it will result in that both video frames and audio data are sent to a rendering module immediately after decoding, and a logic processing of audio-visual synchronization cannot be added. If the rendering module "jitters", data blocking will occur directly, and the data in the frame buffer cannot be decoded asynchronously, reducing data processing efficiency.

The multimedia data buffer in this solution is mainly configured to store multimedia data to be played. Under normal circumstances, that is, when the network is unobstructed, the multimedia data generated by the transmitting end will be continuously transmitted to the receiving end and stored in the multimedia data buffer to supplement the multimedia data that has been passed to the "display thread", so that the "display thread" can continuously play the multimedia data through a multimedia data playback device of the receiving end, and there will be no image freeze problem.

Step 203, calculating a playback duration corresponding to the multimedia data in the buffer in real time.

In this embodiment, the playback duration is calculated according to a total number of frames of the multimedia data currently in the buffer.

Step 204, when the playback duration does not exceed a target expected delay, reducing a first playback speed of the multimedia data in the buffer to obtain a second playback speed.

It should be explained that the target expected delay refers to a time required for real-time video to be transmitted from a source to a destination, generally referred to as "end-to-end" delay, such as a time required for a single frame of video to be transmitted from a camera to a final display. This delay varies greatly in different industries. For broadcasting and television, it is generally around 5-10 seconds. For streaming media, the delay can be 30 seconds or more. For real-time video production or more interactive live streaming (such as competitions and sports betting), the delay often needs to be less than 1 second.

Based on a concept of the target expected delay, the playback duration corresponding to the multimedia data in the multimedia data buffer can be combined to determine whether the currently playable multimedia data can wait for newly added multimedia data supplemented by the transmitting end before the end of playback. Assuming that the currently playable multimedia data cannot wait for the newly added multimedia data from the transmitting end before the end of playback, the playback duration in the buffer is 0, and the receiving end does not know at what time period it will receive the multimedia data transmitted by the transmitting end again. In theory, the image currently seen by the user will freeze and stop playing.

For example, when the playback duration of the multimedia data in the multimedia data buffer is 250 ms, and assuming that the target expected delay is 250 ms, ideally the playback duration is equal to the target expected delay. That is, every time a frame of multimedia data in the multimedia data buffer is consumed, the transmitting end will send a newly added frame of data to the multimedia data buffer in real time for replenishment. When the playback duration does not exceed the target expected delay, it means that there may be a transmission anomaly in the current network, resulting in no new multimedia data entering the multimedia data buffer. If the multimedia data continues to be played at the normal playback speed, the image freeze problem will occur.

When the playback duration in the current buffer is less than the expected delay, it means that there is a transmission anomaly in the current network, resulting in no new buffered data entering the buffer. At this time, image freeze can be prevented by reducing the playback speed of the currently playable multimedia data.

Specifically, by inputting the playback duration and the target expected delay into a preset playback rate adjustment algorithm, an adjusted speed reduction ratio value is obtained; the first playback speed is changed according to the speed reduction ratio value to obtain the second playback speed.

The playback rate adjustment algorithm:

speed reduction ratio value ratio = (playback duration-target expected delay) / target expected delay.

An actual playback speed of a current playback device play_ratio = 1.0+ratio. If playback has not started, play_ratio is an invalid value.

It should be noted that when the playback duration in the current buffer is greater than the target expected delay, it means that the network recovery causes an instantaneous influx of multiple frames of data. In order to prevent the delay from being extended, it is necessary to speed up the playback of the current multimedia data to prevent the buffer data at the receiving end from being too much, which will cause a longer delay and affect the user experience.

Therefore, if the determination result is that the playback duration exceeds the target expected delay, the first playback speed of the multimedia data in the buffer is increased. The specific adjustment process can refer to the above-mentioned playback rate adjustment algorithm.

In summary, in actual applications, the network environment is complex and changeable, and it is difficult to ensure that the network can always remain in a good state in the application scenario of real-time video transmission (such as live broadcast scenario). Therefore, if multimedia data is played while maintaining a normal playback speed, image freeze problems are inevitable. To solve this problem, this solution sets an acceptable target expected delay and calculates the playback duration corresponding to the buffered multimedia data sent to the buffer in real time. The playback duration of the multimedia data in the current multimedia data buffer is compared with the expected delay. Based on the comparison result, it is determined whether to adjust the current playback speed to prevent image freeze problems when no new multimedia data enters the buffer.

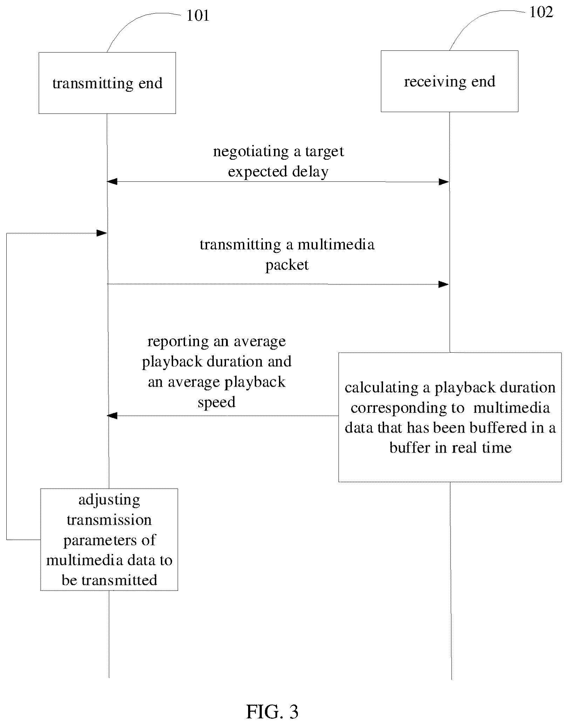

In some embodiments, as shown in FIG. 3, the target expected delay is a result of negotiation between the transmitting end and the receiving end. The specific negotiation process can be divided into two types:

One is that when the receiving end receives the multimedia data packet, it sends a preset target expected delay to the transmitting end, so that the transmitting end can negotiate based on the received preset expected delay and its own data processing capability to obtain a negotiation result; if the preset expected delay matches the data processing capability of the receiving end, the preset expected delay serves as the target expected delay.

The other is that if the preset expected delay does not match the data processing capability of the receiving end, it means that the data processing capability of the transmitting end is not enough to send the multimedia data to the receiving end within the preset expected delay, then the preset expected delay needs to be adjusted, specifically, a value is increased based on the preset expected delay to obtain an adjusted target expected delay.

In some embodiments, although the multimedia data transmission method provided by the present solution can realize adjustable playback speed, since too fast or too slow playback speed of multimedia data will affect the viewing experience, it is necessary to limit an adjustment range of the playback speed.

It determines whether the playback speed falls within a preset allowable playback speed range. If the second playback speed does not fall within the allowable playback speed range, the second playback speed is adjusted to a third playback speed. The third playback speed is a critical value closest to the second playback speed within the allowable playback speed range.

In some embodiments, the playback speed can be adjusted using the multimedia data transmission method provided by this solution. However, if the image is constantly changing speed, it will affect the user's viewing experience. Therefore, in order to solve this problem, this solution sets prerequisites for the playback speed adjustment. A difference value between the first playback speed and a previous historical playback speed is calculated; it is determined whether an absolute value of the difference value exceeds a preset allowable fluctuation range; if it exceeds the allowable fluctuation range, the first playback speed is changed according to a speed reduction ratio value to obtain the second playback speed. If it does not exceed the allowable fluctuation range, the playback will continue at the last set playback speed.

In some embodiments, the transmitting end adjusts parameters of the multimedia data packet to be sent in real time or periodically according to the actual situation of the receiving end, so that the transmission effect of the multimedia data can better meet current data receiving conditions of the receiving end.

As shown in FIG. 3, the current playback duration and playback speed are acquired and transmitted back to the transmitting end; an average playback duration and an average playback speed obtained in a preset period are calculated respectively, so as to provide the transmitting end with regular analysis to determine whether to adjust transmission parameters of the multimedia data to be transmitted. The transmission parameters include a multimedia frame rate and a multimedia bit rate.

In another embodiment, in the embodiment shown in FIG. 2, the method may further include the following steps: Step 301, acquiring multimedia data to be transmitted, constructing a multimedia data packet to be transmitted, transmitting the multimedia data packet to be transmitted to a receiving end, so that the receiving end stores multimedia data to be played in the multimedia data packet into a multimedia data buffer for buffering, and calculating a playback duration corresponding to the multimedia data in the multimedia data buffer in real time, and when a playback duration does not exceed a target expected delay, reducing a first playback speed of the multimedia data in the multimedia data buffer to obtain a second playback speed.

In some embodiments, after transmitting the multimedia data packet to be transmitted to the receiving end, the method further includes the following steps:

receiving a preset target expected delay sent by the receiving end, negotiating according to the received preset expected delay and its own data processing capability to obtain a negotiation result.

if the preset expected delay matches the data processing capability of the receiving end, serving the preset expected delay as the target expected delay, and transmitting the target expected delay back to the receiving end.

if the preset expected delay does not match the data processing capability of the receiving end, adjusting the preset expected delay to obtain an adjusted target expected delay, and transmitting the target expected delay back to the receiving end.

It should be noted that the target expected delay mentioned in this solution is the result of negotiation between the transmitting end and the receiving end. The specific negotiation process can be divided into two types:

One is to receive the preset target expected delay sent by the receiving end, negotiate according to the received preset expected delay and its own data processing capability, and obtain the negotiation result.

If the preset expected delay matches the data processing capability of the receiving end, the preset expected delay serves as the target expected delay, and the target expected delay is transmitted back to the receiving end.

The other is that if the preset expected delay does not match the data processing capability of the receiving end, it means that the data processing capability of the transmitting end is not enough to send multimedia data to the receiving end within the preset expected delay, then the preset expected delay is adjusted, specifically, the value is increased on the basis of the preset expected delay, and the adjusted target expected delay is obtained, and the target expected delay is transmitted back to the receiving end.

In some embodiments, the method further includes the following steps:

receiving an average playback duration and an average playback speed transmitted from the receiving end, determining whether the average playback duration falls within a preset allowable delay range, and obtaining a second determination result. According to the second determination result, it is possible to analyze whether configuration parameters of the data to be sent are reasonable, so that the receiving end can be received normally and will not exceed the target expected delay.

If the second determination result is that the average playback duration does not fall within the allowable delay range, it means that there are unreasonable configuration parameters of the data to be sent, and it is necessary to further determine whether the average playback speed exceeds a first preset threshold value to obtain a third determination result.

If the third determination result is that the average playback speed does not exceed the first preset threshold value (in this solution, the first preset threshold value is 1), the average playback speed is further compared with a historical average playback speed transmitted from the last receiving end to determine whether it is in a decreasing trend. If so, it means that the problem reflected by the receiving end is that the multimedia data in the multimedia buffer cannot be replenished continuously, and the image freeze problem still exists. It can only be prevented by continuously slowing down the playback speed, which is obviously unreasonable. It is necessary to adjust the transmission parameters of the multimedia data to be transmitted.

If the third determination result is that the average playback duration is less than the second preset threshold value, and the second preset threshold value is less than the first preset threshold value, it means that even if the current network of the receiving end is restored, it can continue to receive the multimedia data sent by the transmitting end. However, since the interval time is too long, if the multimedia data continues to be played, it will cause more serious data delay, so this part of the multimedia data packet to be transmitted needs to be discarded.

In summary, in the multimedia data transmission of this solution, for a given expected delay, the transmitting end can estimate playback quality of the receiving end based on the feedback from the receiving end. The receiving end adjusts a playback rate, and the transmitting end adjusts encoding parameters. The two ensure audio and video continuity and improve user experience.

All the above alternative technical solutions can be arbitrarily combined to form alternative embodiments of the present application, which will not be described one by one here.

In specific implementation, the present application is not limited by the execution order of the various steps described. If no conflict occurs, some steps can be performed in other orders or simultaneously.

As can be seen from the above, in the multimedia data transmission method provided in the embodiments of the present application, the multimedia data packet transmitted by the transmitting end is received; the multimedia data to be played in the multimedia data packet is stored in the multimedia data buffer for buffering; the playback duration corresponding to the multimedia data in the buffer is calculated in real time; when the playback duration does not exceed the target expected delay, the first playback speed of the multimedia data in the buffer is reduced to obtain the second playback speed. In the multimedia data transmission method provided in the embodiments of the present application, the acceptable expected delay is set, and the playback duration corresponding to the multimedia data that has been buffered in the buffer is calculated in real time. The playback duration is compared with the expected delay. Based on the comparison result, it is determined whether to adjust the current playback speed. Specifically, when the playback duration in the current buffer is less than the expected delay, it means that there is a transmission anomaly in the current network, resulting in no new buffered data entering the buffer. At this time, image freeze can be prevented by reducing the playback speed of the currently playable multimedia data.

An embodiment of the present application further provides a multimedia data transmission apparatus, which can be integrated into a terminal device.

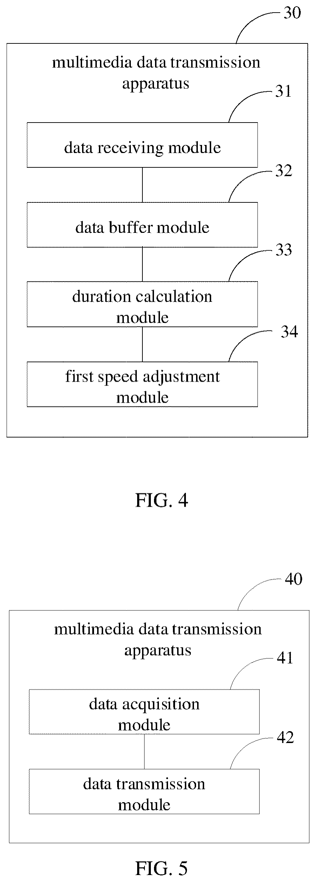

Please refer to FIG. 4, which is a schematic diagram of a structure of a multimedia data transmission apparatus provided in an embodiment of the present application. The multimedia data transmission apparatus 30 may include:

a data receiving module 31 configured to receive a multimedia data packet transmitted by a transmitting end.

a data buffer module 32 configured to store multimedia data to be played in the multimedia data packet into a multimedia data buffer for buffering.

a duration calculation module 33 configured to calculate a playback duration corresponding to the multimedia data in the buffer in real time.

a first speed adjustment module 34 configured to reduce a first playback speed of the multimedia data in the buffer to obtain a second playback speed when the playback duration does not exceed a target expected delay.

In some embodiments, the apparatus also includes a first negotiation module, which is configured to transmit a preset target expected delay to the transmitting end, so that the transmitting end negotiates according to a preset expected delay and its own data processing capability to obtain a negotiation result; if the preset expected delay matches the data processing capability of a receiving end, serve the preset expected delay as the target expected delay; if the preset expected delay does not match the data processing capability of the receiving end, adjust the preset expected delay to obtain an adjusted target expected delay.

In some embodiments, the apparatus further includes a second speed adjustment module, which is configured to increase the first playback speed of the multimedia data in the buffer when the playback duration exceeds the target expected delay.

In some embodiments, the first speed adjustment module 34 is configured to input the playback duration and the target expected delay into a preset playback rate adjustment algorithm to obtain an adjusted speed reduction ratio value. changing the first playback speed according to the speed reduction ratio value to obtain the second playback speed.

In some embodiments, the apparatus further includes a third speed adjustment module for determining whether the second playback speed falls within a preset allowable playback speed range. If the second playback speed does not fall within the allowable playback speed range, the second playback speed is adjusted to a third playback speed. The third playback speed is a critical value in the allowable playback speed range that is closest to the second playback speed.

In some embodiments, the apparent value also includes a fourth speed adjustment module, which is configured to calculate a difference value between the first playback speed and a previous historical playback speed; to determine whether an absolute value of the difference value exceeds a preset allowable fluctuation range. If the allowable fluctuation range is exceeded, the first playback speed is changed according to the speed reduction ratio value to obtain the second playback speed.

In some embodiments, the apparatus also includes a data transmission module, which is configured to acquire a current playback duration and playback speed and transmit them back to the transmitting end; and calculate an average playback duration and an average playback speed obtained within a preset period respectively, so as to provide the transmitting end with regular analysis to determine whether to adjust transmission parameters of multimedia data to be transmitted. The transmission parameters include a multimedia frame rate and a multimedia bit rate.

In specific implementation, the above modules can be implemented as independent entities, or can be arbitrarily combined to be implemented as the same entity or several entities.

As can be seen from the above, in the multimedia data transmission apparatus 30 provided in the embodiment of the present application, the data receiving module 31 is configured to receive the multimedia data packet transmitted by the transmitting end; the data buffer module 32 is configured to store the multimedia data to be played in the multimedia data packet into the multimedia data buffer for buffering; the duration calculation module 33 is configured to calculate the playback duration corresponding to the multimedia data in the buffer in real time; and the first speed adjustment module 34 is configured to reduce the first playback speed of the multimedia data in the buffer to obtain the second playback speed when the playback duration does not exceed the target expected delay.

An embodiment of the present application further provides a multimedia data transmission apparatus, which can be integrated into a terminal device.

Please refer to FIG. 5, which is a schematic diagram of a structure of a multimedia data transmission apparatus provided in an embodiment of the present application. The multimedia data transmission apparatus 40 may include:

a data acquisition module 41 configured to acquire multimedia data to be transmitted.

a data transmission module 42 configured to transmit multimedia data packet to be transmitted to a receiving end, so that the receiving end stores multimedia data to be played in the multimedia data packet into a multimedia data buffer for buffering, and calculate a playback duration corresponding to the multimedia data in the multimedia data buffer in real time, and when the playback duration does not exceed a target expected delay, reduce a first playback speed of the multimedia data in the multimedia data buffer to obtain a second playback speed.

In some embodiments, the apparatus also includes a second negotiation module, which is configured to receive a preset target expected delay transmitted by the receiving end, and negotiate according to a received preset expected delay and its own data processing capability to obtain a negotiation result. If the preset expected delay matches the data processing capability of the receiving end, the preset expected delay serves as the target expected delay, and the target expected delay is transmitted back to the receiving end. If the preset expected delay does not match the data processing capability of the receiving end, the preset expected delay is adjusted to obtain an adjusted target expected delay, and the target expected delay is transmitted back to the receiving end.

In some embodiments, the apparatus further includes a data adjustment module, which is configured to receive an average playback duration and an average playback speed transmitted back from the receiving end, determine whether the average playback duration falls within a preset allowable delay range to obtain a second determination result. If the second determination result is that the average playback duration does not fall within the allowable delay range, it is further determined whether the average playback speed exceeds a first preset threshold value to obtain a third determination result. If the third determination result is that the average playback speed does not exceed the first preset threshold value, the average playback speed is further compared with a historical average playback speed transmitted from the last receiving end to determine whether it is in a decreasing trend. If so, the transmission parameters of the multimedia data to be transmitted are adjusted.

In some embodiments, the apparatus further comprises a data discarding module, configured to discard the multimedia data packet to be transmitted if the third determination result is that the average playback duration is less than the second preset threshold value, where the second preset threshold value is less than the first preset threshold value.

In specific implementation, the above modules can be implemented as independent entities, or can be arbitrarily combined to be implemented as the same entity or several entities.

As can be seen from the above, in the multimedia data transmission apparatus 40 provided in the embodiment of the present application, the data acquisition module 41 is configured to acquire the multimedia data to be transmitted. The data transmission module 42 is configured to transmit the multimedia data packet to be transmitted to the receiving end, so that the receiving end stores the multimedia data to be played in the multimedia data packet into the multimedia data buffer for buffering, and calculates the playback duration corresponding to the multimedia data in the multimedia data buffer in real time. When the playback duration does not exceed the target expected delay, the first playback speed of the multimedia data in the multimedia data buffer is reduced to obtain the second playback speed.

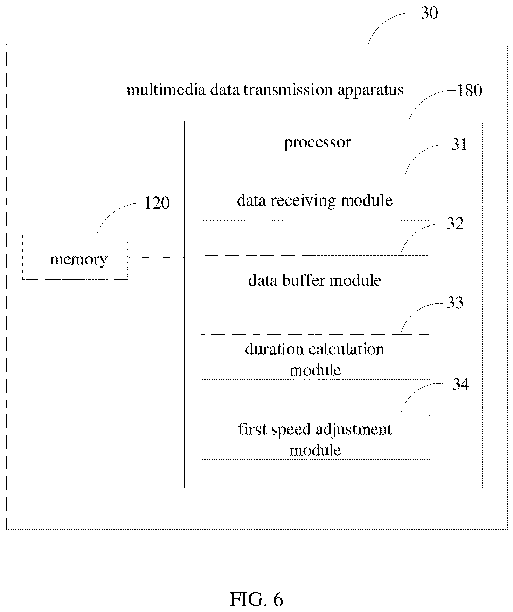

Please refer to FIG. 6, which is another schematic diagram of a structure of a multimedia data transmission apparatus provided in an embodiment of the present application. The multimedia data transmission apparatus 30 includes a memory 120, one or more processors 180, and one or more applications. The one or more applications are stored in the memory 120 and configured to be executed by the processor 180. The processor 180 may include a data receiving module 31, a data buffer module 32, a duration calculation module 33, and a first speed adjustment module 34. For example, the structures and connection relationships of the above components may be as follows:

The memory 120 can be configured to store applications and data. The applications stored in the memory 120 include executable codes. The applications can be composed of various functional modules. The processor 180 executes various functional applications and data processing by running the applications stored in the memory 120. In addition, the memory 120 can include a high-speed random access memory and a non-volatile memory, such as at least one disk memory device, flash memory device, or other volatile solid-state memory device. Accordingly, the memory 120 can also include a memory controller to provide the processor 180 with access to the memory 120.

The processor 180 is a control center of the apparatus, and uses various interfaces and lines to connect various parts of the entire terminal. By running or executing applications stored in the memory 120 and calling data stored in the memory 120, the processor 180 performs various functions of the apparatus and processes data, thereby monitoring the apparatus as a whole. Optionally, the processor 180 may include one or more processing cores; preferably, the processor 180 may integrate an application processor and a modem processor, where the application processor mainly processes the operating system, user interface, and application programs.

Specifically in this embodiment, the processor 180 will load the executable code corresponding to one or more application processes into the memory 120 according to the following instructions, and the processor 180 will run the application stored in the memory 120 to achieve various functions:

a data receiving instruction configured to receive a multimedia data packet transmitted by a transmitting end.
a data calculation instruction configured to store multimedia data to be played in the multimedia data packet into a multimedia data buffer for buffering.
a duration calculation instruction configured to calculate a playback duration corresponding to the multimedia data in the buffer in real time.
a first speed adjustment instruction configured to reduce a first playback speed of the multimedia data in the buffer to obtain a second playback speed when the playback duration does not exceed a target expected delay.

In some embodiments, the program also includes a first negotiation instruction, which is configured to transmit a preset target expected delay to the transmitting end, so that the transmitting end negotiates according to a received preset expected delay and its own data processing capability to obtain a negotiation result; if the preset expected delay matches the data processing capability of a receiving end, serve the preset expected delay as the target expected delay; if the preset expected delay does not match the data processing capability of the receiving end, adjust the preset expected delay to obtain an adjusted target expected delay.

In some embodiments, the program further includes a second speed adjustment instruction for increasing the first playback speed of the multimedia data in the buffer when the playback duration exceeds the target expected delay.

In some embodiments, the first speed adjustment instruction is configured to input the playback duration and the target expected delay into a preset playback rate adjustment algorithm to obtain an adjusted speed reduction ratio value. change the first playback speed according to the speed reduction ratio value to obtain the second playback speed.

In some embodiments, the program also includes a third speed adjustment instruction, which is configured to determine whether the second playback speed falls within a preset allowable playback speed range; if the second playback speed does not fall within the allowable playback speed range, adjust the second playback speed to a third playback speed, where the third playback speed is a critical value within the allowable playback speed range that is closest to the second playback speed.

In some embodiments, the program also includes a fourth speed adjustment instruction, which is configured to calculate a difference value between the first playback speed and a previous historical playback speed; determine whether an absolute value of the difference value exceeds a preset allowable fluctuation range; if it exceeds the allowable fluctuation range, change the first playback speed according to the speed reduction ratio value to obtain the second playback speed.

In some embodiments, the program further includes a data transmission instruction configured to acquire a current playback duration and playback speed and transmitting them back to the transmitting end; respectively calculate an average playback duration and an average playback speed obtained within a preset period, so as to provide the transmitting end with regular analysis to determine whether to adjust transmission parameters of multimedia data to be transmitted, where the transmission parameters include a multimedia frame rate and a multimedia bit rate.

An embodiment of the present application further provides a terminal device, which may be a server, a smart phone, a computer, a tablet computer, or other device.

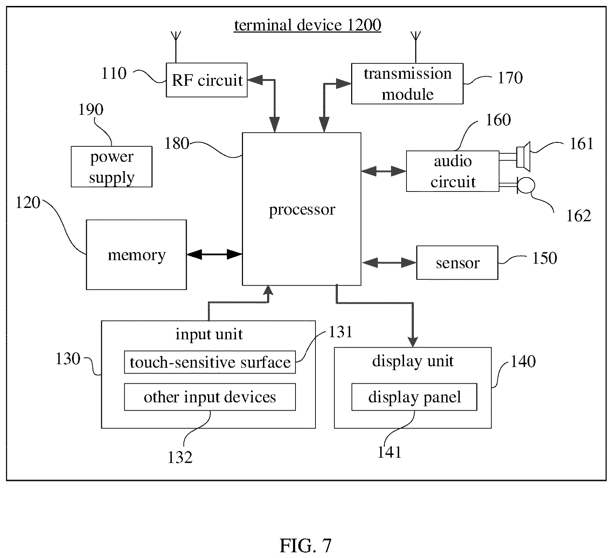

Please refer to FIG. 7, which shows a schematic diagram of a structure of a terminal device provided in an embodiment of the present application, and the terminal device can be configured to implement the multimedia data transmission method provided in the above embodiment. The terminal device 1200 can be a television, a smart phone, or a tablet computer.

As shown in FIG. 7, the terminal device 1200 may include components such as an RF (Radio Frequency) circuit 110, a memory 120 including one or more (only one is shown in the figure) computer-readable storage media, an input unit 130, a display unit 140, a sensor 150, an audio circuit 160, a transmission module 170, a processor 180 including one or more (only one is shown in the figure) processing cores, and a power supply 190. Those skilled in the art will appreciate that the structure of the terminal device 1200 shown in FIG. 7 does not limit the terminal device 1200, and may include more or fewer components than shown in the figure, or combine certain components, or arrange the components differently.

The RF circuit 110 is configured to receive and transmit electromagnetic waves and to realize conversions of the electromagnetic waves and electrical signals, thereby communicating with a communication network or any other device. The RF circuit 110 can include various circuit elements used for performing these functions, for example, an antenna, a radio frequency transmitter, a digital signal processor, an encryption/decryption chip, a subscriber identification module (SIM) card, a memory and the like. The RF circuit 110 can communicate with various networks, for example, an internet, an intranet or a wireless network, or can communicate with any other device via a wireless network.

The memory 120 can be configured to store software programs and modules, for example, the program instructions/modules corresponding to the multimedia data transmission method in the above-mentioned embodiments. A processor 180 executes various functional applications and data processing by operating the software programs and the modules stored in the memory 120. A vibration reminder mode can be automatically selected to transmit multimedia data according to a current scene of the terminal device, which can not only ensure that scenes such as meetings are not disturbed, but also ensure that users can sense incoming calls, thereby improving the intelligence of the terminal device. The memory 120 can include a high speed random access memory and also can include a non-volatile memory, such as one or more disk storage devices, a flash memory device or other non-volatile solid storage devices. In some embodiments, the memory 120 can further include a remote memory disposed corresponding to the processor 180. The remote memory can be connected to the electronic terminal 1200 via a network. Examples of the network include but are not limited to an internet, an intranet, a local area network, a mobile communication network and the combinations of them.

The input unit 130 can be configured to receive input number or character information and to generate keyboard, mouse, joystick, optical or trajectory ball signal inputs related to a user's setting and functional control. In detail, the input unit 130 can include a touch-sensitive surface 131 and other input devices 132. The touch-sensitive surface 131, also called a touch display screen or a touch panel, can be configured to detect touch operations of a user on or near the touch-sensitive surface 131 (for example, operations carried out by the user through any suitable objects or attachments, such as a finger, a touch pen and the like, on the touch-sensitive surface 131 or near the touch-sensitive surface 131) and to drive a corresponding device connected therewith according to a preset program. Optionally, the touch-sensitive surface 131 can include a touch detection device and a touch controller. The touch detection device detects the touch direction of the user, detects a signal caused by the touch operation, and transmits the signal to the touch controller. The touch controller receives touch information from the touch detection device, converts the touch information into a contact coordinate, and then transmits the contact coordinate to the processor 180 and can receive a command transmitted by the processor 180 and execute the command. Moreover, the touch-sensitive surface 131 can be one of various types, such as a resistance type, a capacitance type, an infrared type, a surface acoustic wave type and the like. Besides the touch-sensitive surface 131, the input unit 130 also can include the other input devices 132. In detail, other input devices 132 can include, but is not limited to, one or more of a physical keyboard, function keys (such as a volume control key, a switching key and the like), a trackball, a mouse, a joystick and the like.

The display unit 140 can be configured to display information input by the user or information provided for the user and various graphical user interfaces of the electronic terminal 1200. The graphical user interfaces can be constituted by graphics, texts, icons, videos and any combinations of them. The display unit 140 can include a display panel 141. Optionally, the display panel 141 can be configured in forms of a Liquid Crystal Display (LCD), an Organic Light-Emitting Diode (OLED) and the like. Furthermore, the touch panel 131 can cover the display panel 141. When the touch-sensitive surface 131 detects a touch operation on or near it, the signal caused by the touch operation is transmitted to the processor 180 to determine the type of a touch event. Then, the processor 180 provides a corresponding visual output on the display panel 141 according to the type of the touch event. Although the touch-sensitive surface 131 and the display panel 141 in FIG. 7 are served as two independent parts for accomplishing input and output functions, it can be understood that the touch-sensitive surface 131 and the display panel 141 can be integrated to accomplish the input and output functions.

The electronic terminal 1200 can further include at least one sensor 150, such as an optical sensor, a motion sensor and other sensors. In detail, the optical sensor can include an environmental light sensor and a proximity sensor. The environmental light sensor can adjust brightness of the display panel 141 according to the lightness of environmental light. The proximity sensor may turn off the display panel 141 and/or the backlight when the terminal device 1200 is moved to the ear. As one type of the motion sensor, an accelerometer sensor can detect the value of an acceleration in each direction (generally in three axial directions), can detect the value and the direction of gravity in a static state, which can be used in posture identifying functions (such as switching between a horizontal screen and a vertical screen, switching related to a game, and calibration on the posture of a magnetometer), vibration identifying functions (such as for pedometer and striking) and the like. Furthermore, a gyroscope, a barometer, a humidity meter, a thermometer, an infrared sensor and other sensors can be integrated into the electronic terminal 1200, and explanations are not repeated herein.

The audio circuit 160, a speaker 161 and a microphone 162 can provide an audio interface between the user and the electronic terminal 1200. The audio circuit 160 can transmit an electric signal obtained by converting received audio data to the speaker 161. The electric signal is converted into a sound signal to be outputted by the speaker 161. On the other hand, the microphone 162 converts a collected sound signal into an electric signal. The audio circuit 160 receives the electric signal and converts the electric signal into audio data. After the audio data is outputted to the processor 180 and is processed, it is transmitted, for example, to another terminal through the RF circuit 110, or is outputted to the memory 120 in order to be further processed. The audio circuit 160 can further include an ear plug hole for providing communication between an external ear phone and the electronic terminal 1200.

The electronic terminal 1200 can help the user to receive requests, send E-mails, browse web pages, and access streaming media by a transmission module 170 (for example, a Wi-Fi module). The transmission module 170 provides wireless broadband internet access for the user. Although the transmission module 170 is shown in FIG. 7, it should be understood that the transmission module 170 is not the necessary part of the electronic terminal 1200 and can completely be omitted as required without changing the scope of essence of the present disclosure.

The processor 180 is a control center of the electronic terminal 1200, is connected with all the parts of the whole mobile phone by various interfaces and lines, and is configured to execute various functions of the electronic terminal 1200 and process the data by operating or executing software programs and/or modules stored in the memory 120 and calling data stored in the memory 120, so as to carry out integral monitoring on the electronic terminal. Optionally, the processor 180 can include one or more processing cores. In some embodiments, the processor 180 can be integrated with an application processor and a modulation/demodulation processor. The application processor is mainly configured to process an operating system, a user interface, an application program and the like. The modulation/demodulation processor is mainly configured to process wireless communication. It can be understood that the modulation/demodulation processor can also be not integrated into the processor 180.

The electronic terminal 1200 further includes a power supply 190 for supplying power to each part. In some embodiments, the power supply can be logically connected with the processor 180 by a power supply management system, so as to implement functions of charge management, discharge management, power consumption management and the like by the power supply management system. The power supply 190 can further include one or more direct current or alternating current power supplies, recharging systems, power supply failure detection circuits, power converters or inverters, power supply status indicators, and other arbitrary components.

Although not shown, the electronic terminal 1200 can further include a camera (for example, a front camera or a rear camera), a BLUETOOTH module, and the like which are not further described herein. In the present embodiment, the display unit of the electronic terminal 1200 is a touch screen display, and the electronic terminal 1200 further includes a memory 120 and one or more programs. The one or more programs are stored in the memory 120 and configured to be executed by one or more processors 180 to perform instructions for executing the following operations contained in the one or more programs:

a data receiving instruction configured to receive a multimedia data packet transmitted by a transmitting end.

a data calculation instruction configured to store multimedia data to be played in the multimedia data packet into a multimedia data buffer for buffering.

a duration calculation instruction configured to calculate a playback duration corresponding to the multimedia data in the buffer in real time.

a first speed adjustment instruction configured to reduce a first playback speed of the multimedia data in the buffer to obtain a second playback speed when the playback duration does not exceed a target expected delay.

In some embodiments, the program also includes a first negotiation instruction, which is configured to transmit a preset target expected delay to the transmitting end, so that the transmitting end negotiates according to a received preset expected delay and its own data processing capability to obtain a negotiation result; if the preset expected delay matches the data processing capability of a receiving end, serve the preset expected delay as the target expected delay; if the preset expected delay does not match the data processing capability of the receiving end, adjust the preset expected delay to obtain an adjusted target expected delay.

In some embodiments, the program further includes a second speed adjustment instruction for increasing the first playback speed of the multimedia data in the buffer when the playback duration exceeds the target expected delay.

In some embodiments, the first speed adjustment instruction is configured to input the playback duration and the target expected delay into a preset playback rate adjustment algorithm to obtain an adjusted speed reduction ratio value. change the first playback speed according to the speed reduction ratio value to obtain the second playback speed.

In some embodiments, the program also includes a third speed adjustment instruction, which is configured to determine whether the second playback speed falls within a preset allowable playback speed range; if the second playback speed does not fall within the allowable playback speed range, adjust the second playback speed to a third playback speed, where the third playback speed is a critical value within the allowable playback speed range that is closest to the second playback speed.

In some embodiments, the program also includes a fourth speed adjustment instruction, which is configured to calculate a difference value between the first playback speed and a previous historical playback speed; determine whether an absolute value of the difference value exceeds a preset allowable fluctuation range; if it exceeds the allowable fluctuation range, change the first playback speed according to the speed reduction ratio value to obtain the second playback speed.

In some embodiments, the program further includes a data transmission instruction configured to acquire a current playback duration and playback speed and transmitting them back to the transmitting end; respectively calculate an average playback duration and an average playback speed obtained within a preset period, so as to provide the transmitting end with regular analysis to determine whether to adjust transmission parameters of multimedia data to be transmitted, where the transmission parameters include a multimedia frame rate and a multimedia bit rate.

An embodiment of the present application also provides a terminal device. The terminal device may be a device such as a smart phone, a computer, etc.

As can be seen from the above, the embodiment of the present application provides a terminal device 1200, and the terminal device 1200 performs the following steps:

receiving a multimedia data packet transmitted by a transmitting end, reading multimedia data to be played in the multimedia data packet.

storing the multimedia data to be played in the multimedia data packet into a multimedia data buffer for buffering, and calculating a playback duration corresponding to the multimedia data in the buffer in real time.

determining whether the playback duration exceeds a target expected delay to obtain a determination result.

if the determination result is that the playback duration does not exceed the target expected delay, reducing a playback speed of the multimedia data in the buffer.

In another embodiment, the terminal device 1200 further performs the following steps:

acquiring multimedia data to be transmitted.
transmitting the multimedia data packet to be transmitted to a receiving end, so that the receiving end stores multimedia data to be played in the multimedia data packet into a multimedia data buffer for buffering, and calculates a playback duration corresponding to the multimedia data in the multimedia data buffer in real time, and when the playback duration does not exceed a target expected delay, reduces a first playback speed of the multimedia data in the multimedia data buffer to obtain a second playback speed.

An embodiment of the present application further provides a storage medium, where a computer program is stored in the storage medium. When the computer program is executed on a computer, the computer executes the multimedia data transmission method described in any one of the above embodiments.

It should be noted that, for the multimedia data transmission method described in the present application, ordinary testers in the field can understand that the implementation of all or part of the process of the multimedia data transmission method described in the embodiments of the present application can be completed by controlling the relevant hardware through a computer program, and the computer program can be stored in a computer-readable storage medium, such as stored in the memory of a terminal device, and executed by at least one processor in the terminal device, and the execution process may include the process of the embodiments of the multimedia data transmission method. The storage medium can be a magnetic disk, an optical disk, a read-only memory (ROM), a random access memory (RAM), etc.

For the multimedia data transmission apparatus of the embodiments of the present application, each functional module can be integrated into a processing chip, or each module can exist physically separately, or two or more modules can be integrated into one module. The above integrated modules can be implemented in the form of hardware or in the form of software functional modules. If the integrated modules are implemented in the form of software functional modules and sold or used as independent products, they can also be stored in a computer-readable storage medium, such as a read-only memory, a disk or an optical disk.

The multimedia data transmission method and apparatus, the medium, and the device provided in the embodiments of the present application are described in detail above. The principles and implementation methods of the present application are described in detail using specific examples. The description of the above embodiments is only configured to help understand the method and core idea of the present application. At the same time, for those skilled in the art, according to the idea of the present application, there will be changes in the specific implementation methods and application scope. In summary, the content of this specification should not be understood as limiting the present application.

## Claims

1. A multimedia data transmission method, comprising:

receiving a multimedia data packet transmitted by a transmitting end;
storing multimedia data to be played in the multimedia data packet into a multimedia data buffer for buffering;
calculating a playback duration corresponding to the multimedia data in the buffer in real time;
when the playback duration does not exceed a target expected delay, reducing a first playback speed of the multimedia data in the buffer to obtain a second playback speed.

2. The method according to claim 1, wherein before reducing the first playback speed of the multimedia data in the buffer to obtain the second playback speed when the playback duration does not exceed the target expected delay, the method further comprises:

transmitting a preset target expected delay to the transmitting end, so that the transmitting end negotiates according to a preset expected delay and its own data processing capability to obtain a negotiation result;
if the preset expected delay matches the data processing capability of a receiving end, serving the preset expected delay as the target expected delay;
if the preset expected delay does not match the data processing capability of the receiving end, adjusting the preset expected delay to obtain an adjusted target expected delay.

3. The method according to claim 1, wherein after calculating the playback duration corresponding to the multimedia data in the buffer in real time, the method further comprises:
when the playback duration exceeds the target expected delay, increasing the first playback speed of the multimedia data in the buffer.

4. The method according to claim 1, wherein the reducing the first playback speed of the multimedia data in the buffer to obtain the second playback speed comprises:

inputting the playback duration and the target expected delay into a preset playback rate adjustment algorithm to obtain an adjusted speed reduction ratio value;
changing the first playback speed according to the speed reduction ratio value to obtain the second playback speed.

5. The method according to claim 4, wherein the playback rate adjustment algorithm is:

speed reduction ratio value ratio = (playback duration-target expected delay)/target expected delay;

an actual playback speed of a current playback device play_ratio=1.0+ratio, if a playback has not started, play_ratio is an invalid value.

6. The method according to claim 4, wherein after changing the first playback speed according to the speed reduction ratio value to obtain the second playback speed, the method further comprises:

determining whether the second playback speed falls within a preset allowable playback speed range;
if the second playback speed does not fall within the allowable playback speed range, adjusting the second playback speed to a third playback speed, wherein the third playback speed is a critical value closest to the second playback speed within the allowable playback speed range.

7. The method according to claim 4, wherein before changing the first playback speed according to the speed reduction ratio value to obtain the second playback speed, the method further comprises:

calculating a difference value between the first playback speed and a previous historical playback speed;
determining whether an absolute value of the difference value exceeds a preset allowable fluctuation range;
correspondingly, the changing the first playback speed according to the speed reduction ratio value to obtain the second playback speed comprises:
if it exceeds the allowable fluctuation range, changing the first playback speed according to the speed reduction ratio value to obtain the second playback speed.

8. The method according to claim 1, wherein after reducing the first playback speed of the multimedia data in the buffer to obtain the second playback speed, the method further comprises:

acquiring a current playback duration and playback speed and transmitting them back to the transmitting end;
respectively calculating an average playback duration and an average playback speed obtained within a preset period, so as to provide the transmitting end with regular analysis to determine whether to adjust transmission parameters of multimedia data to be transmitted, wherein the transmission parameters comprise a multimedia frame rate and a multimedia bit rate.

9. A multimedia data transmission method, comprising:

acquiring a multimedia data packet to be transmitted;
transmitting the multimedia data packet to be transmitted to a receiving end, so that the receiving end stores multimedia data to be played in the multimedia data packet into a multimedia data buffer for buffering, and calculating a playback duration corresponding to the multimedia data in the multimedia data buffer in real time, and when the playback duration does not exceed a target expected delay, reducing a first playback speed of the multimedia data in the multimedia data buffer to obtain a second playback speed.

10. The multimedia data transmission method according to claim 9, wherein before calculating the playback duration corresponding to the multimedia data in the multimedia data buffer in real time, the method further comprises:

receiving a preset target expected delay transmitted by the receiving end, negotiating according to a received preset expected delay and its own data processing capability to obtain a negotiation result;

if the preset expected delay matches the data processing capability of the receiving end, serving the preset expected delay as a target expected delay, and transmitting the target expected delay back to the receiving end.

11. The multimedia data transmission method according to claim 9, wherein after receiving the preset target expected delay transmitted by the receiving end, negotiating according to the received preset expected delay and its own data processing capability to obtain the negotiation result, the method further comprises:

if the preset expected delay does not match the data processing capability of the receiving end, adjusting the preset expected delay to obtain an adjusted target expected delay, and transmitting the target expected delay back to the receiving end.

12. The multimedia data transmission method according to claim 10, wherein after reducing the first playback speed of the multimedia data in the multimedia data buffer to obtain the second playback speed, the method further comprises:

receiving an average playback duration and an average playback speed transmitted from the receiving end, determining whether the average playback duration falls within a preset allowable delay range, and obtaining a second determination result;

if the second determination result is that the average playback duration does not fall within the allowable delay range, further determining whether the average playback speed exceeds a first preset threshold value, and obtaining a third determination result.

13. The multimedia data transmission method according to claim 12, wherein after obtaining the second determination result, the method further comprises:

if the third determination result is that the average playback speed does not exceed the first preset threshold value, then further comparing the average playback speed with a historical average playback speed transmitted from a last receiving end to determine whether it is in a decreasing trend, and if so, adjusting transmission parameters of multimedia data to be transmitted.

14. The multimedia data transmission method according to claim 10, wherein after obtaining the third determination result, the method further comprises:

if the third determination result is that the average playback duration is less than a second preset threshold value, discarding the multimedia data packet to be transmitted, wherein the second preset threshold value is less than a first preset threshold value.

15. A multimedia data transmission apparatus, wherein the multimedia data transmission apparatus comprises:

a data receiving module configured to receive a multimedia data packet transmitted by a transmitting end;
a data buffer module configured to store multimedia data to be played in the multimedia data packet into a multimedia data buffer for buffering;
a duration calculation module configured to calculate a playback duration corresponding to the multimedia data in the buffer in real time;
a first speed adjustment module configured to reduce a first playback speed of the multimedia data in the buffer to obtain a second playback speed when the playback duration does not exceed a target expected delay.

16. The apparatus according to claim 15, wherein when the playback duration does not exceed the target expected delay, the apparatus further comprises a first negotiation module, configured to transmit a preset target expected delay to the transmitting end, so that the transmitting end negotiates according to a preset expected delay and its own data processing capability to obtain a negotiation result; if the preset expected delay matches the data processing capability of a receiving end, serve the preset expected delay as the target expected delay; if the preset expected delay does not match the data processing capability of the receiving end, adjust the preset expected delay to obtain an adjusted target expected delay.

17. A multimedia data transmission apparatus, wherein the multimedia data transmission apparatus comprises:

a data acquisition module configured to acquire multimedia data to be transmitted;
a data transmission module configured to transmit multimedia data packet to be transmitted to a receiving end, so that the receiving end stores multimedia data to be played in the multimedia data packet into a multimedia data buffer for buffering, and calculate a playback duration corresponding to the multimedia data in the multimedia data buffer in real time, and when the playback duration does not exceed a target expected delay, reduce a first playback speed of the multimedia data in the multimedia data buffer to obtain a second playback speed.

18. The apparatus according to claim 17, wherein the apparatus further comprises a second negotiation module, configured to receive a preset target expected delay transmitted by the receiving end, and negotiate according to a received preset expected delay and its own data processing capability to obtain a negotiation result; if the preset expected delay matches the data processing capability of the receiving end, serve the preset expected delay as a target expected delay, and transmit the target expected delay back to the receiving end.

19. A computer-readable storage medium, wherein the computer-readable storage medium stores a plurality of instructions, the instructions are suitable for being loaded by a processor to execute the multimedia data transmission method according to any one according to claims 1 to 8 or 9 to 14.

20. A terminal device, comprising a processor and a memory, wherein the memory stores a plurality of instructions, and the processor loads the instructions to execute the multimedia data transmission method according to any one according to claims 1 to 8 or 9 to 14.

FIG. 1

```
┌─────────────────────┐                      ┌─────────────────────┐
│  101. transmitting  │                      │  102. receiving end │
│        end          │                      │                     │
└─────────────────────┘                      └─────────────────────┘
           │                                            │
           │      301, transmitting      ┌──────────────────────────────┐
           │     multimedia data packet  │ 201, receiving a multimedia   │
           ├────────────────────────────►│ data packet transmitted by a  │
           │                             │ transmitting end              │
           │                             └──────────────────────────────┘
           │                                            │
           │                             ┌──────────────────────────────┐
           │                             │ 202, storing multimedia data  │
           │                             │ to be played in the multimedia│
           │                             │ data packet into a multimedia │
           │                             │ data buffer for buffering     │
           │                             └──────────────────────────────┘
           │                                            │
           │                             ┌──────────────────────────────┐
           │                             │ 203, calculating a playback   │
           │                             │ duration corresponding to the │
           │                             │ multimedia data in the buffer │
           │                             │ in real time                  │
           │                             └──────────────────────────────┘
           │                                            │
           │                             ┌──────────────────────────────┐
           │                             │ 204, when the playback        │
           │                             │ duration does not exceed a    │
           │                             │ target expected delay,        │
           │                             │ reducing a first playback     │
           │                             │ speed of the multimedia data  │
           │                             │ in the buffer to obtain a     │
           │                             │ second playback speed         │
           │                             └──────────────────────────────┘
           │                                            │
```

FIG. 2

101

102

transmitting end

receiving end

negotiating a target
expected delay

transmitting a multimedia
packet

reporting an average
playback duration and
an average playback
speed

calculating a playback duration
corresponding to multimedia
data that has been buffered in a
buffer in real time

adjusting
transmission
parameters of
multimedia data to
be transmitted

FIG. 3

─ 30

multimedia data transmission
apparatus
─ 31

data receiving module

─ 32

data buffer module

─ 33

duration calculation
module

─ 34

first speed adjustment
module

FIG. 4

─ 40

multimedia data transmission
apparatus
─ 41

data acquisition
module

─ 42

data transmission
module

FIG. 5

30

multimedia data transmission apparatus ⌐180

processor ⌐31

data receiving module ⌐32

data buffer module ⌐33

duration calculation module ⌐34

first speed adjustment module

memory ⌐120

FIG. 6

FIG. 7

## INTERNATIONAL SEARCH REPORT

| International application No. |
| --- |
| **PCT/CN2024/075841** |

**A.    CLASSIFICATION OF SUBJECT MATTER**

H04N 21/433(2011.01)i

According to International Patent Classification (IPC) or to both national classification and IPC

**B.    FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

VEN, EPTXT, WOTXT, USTXT, CNKI, CNABS, CNTXT: 多媒体, 传输, 发送, 接收, 缓冲, 缓存, 计算, 时长, 长度, 播放, 比较, 降低, 改变, 调整, 播放速度, 卡顿, 协商, 匹配, multimedia, transmit, send, receive, buffer, cache, calculate, duration, time, length, play, compare, decrease, change, adjust, speed, stuck, negotiation, match

**C.    DOCUMENTS CONSIDERED TO BE RELEVANT**

| Category* | Citation of document, with indication, where appropriate, of the relevant passages | Relevant to claim No. |
| --- | --- | --- |
| Y | US 6665751 B1 (IBM) 16 December 2003 (2003-12-16)<br>description, column 1, line 9 to column 5, line 58, and figures 1-4 | 1, 3-5, 9, 15, 17, 19-20 |
| Y | CN 110933516 A (HUAWEI TECHNOLOGIES CO., LTD.) 27 March 2020 (2020-03-27)<br>description, paragraphs 3-283, and figures 1-8 | 1, 3-5, 9, 15, 17, 19-20 |
| A | CN 113727186 A (BAIGUOYUAN TECHNOLOGY (SINGAPORE) PTE LTD.) 30 November 2021 (2021-11-30)<br>entire document | 1-20 |
| A | CN 109831689 A (VIVO COMMUNICATION TECHNOLOGY CO., LTD.) 31 May 2019 (2019-05-31)<br>entire document | 1-20 |
| A | KR 20170018604 A (SK TELECOM CO., LTD.) 20 February 2017 (2017-02-20)<br>entire document | 1-20 |
| A | WO 2020125153 A1 (NANJING GMINNOVATION TECHNOLOGY CO., LTD.) 25 June 2020 (2020-06-25)<br>entire document | 1-20 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **30 April 2024** | **06 May 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 676 065 A1**

**INTERNATIONAL SEARCH REPORT**

| International application No. |
| --- |
| **PCT/CN2024/075841** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2021218479 A1 (HUAWEI TECHNOLOGIES CO., LTD.) 04 November 2021 (2021-11-04) entire document | 1-20 |
| PX | CN 117412102 A (SHENZHEN TCL NEW TECHNOLOGY CO., LTD.) 16 January 2024 (2024-01-16) claims 1-15, and description, paragraphs 86-88, 125, and 138 | 1-20 |

**INTERNATIONAL SEARCH REPORT**
Information on patent family members

International application No.

**PCT/CN2024/075841**

| Patent document cited in search report | | | Publication date (day/month/year) | Patent family member(s) | Publication date (day/month/year) |
|---|---|---|---|---|---|
| US | 6665751 | B1 | 16 December 2003 | None | |
| CN | 110933516 | A | 27 March 2020 | None | |
| CN | 113727186 | A | 30 November 2021 | None | |
| CN | 109831689 | A | 31 May 2019 | None | |
| KR | 20170018604 | A | 20 February 2017 | None | |
| WO | 2020125153 | A1 | 25 June 2020 | None | |
| WO | 2021218479 | A1 | 04 November 2021 | None | |
| CN | 117412102 | A | 16 January 2024 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310225656